# EUROPEAN PATENT APPLICATION

(11) **EP 4 597 694 A1**
(43) Date of publication of application: **06.08.2025**
(21) Application number: 24214561.3
(22) Date of filing: 21.11.2024
(51) Int. Cl.: H01M 50/103, H01M 50/107, H01M 50/167, H01M 50/176, H01M 50/538, H01M 10/0525, H01M 10/0587

(54) **RECHARGEABLE BATTERY**

(30) Priority: 05.02.2024 KR 20240017630
(71) Applicant: Samsung SDI Co., Ltd., Yongin-si, Gyeonggi-do 17084 (KR)
(72) Inventor: Kim, Joungku, Yongin-si, Gyeonggi-do 17084 (KR); Park, Junghyun, Yongin-si, Gyeonggi-do 17084 (KR); Kim, Junghyun, Yongin-si, Gyeonggi-do 17084 (KR); Lee, Jungsu, Yongin-si, Gyeonggi-do 17084 (KR); Kim, Youngho, Yongin-si, Gyeonggi-do 17084 (KR)
(74) Representative: Gulde & Partner

(57) **Abstract**

A rechargeable battery includes an electrode assembly (130) including a first electrode, a second electrode, and a separator, a current collecting plate (140, 150) electrically connected to one of the first electrode and the second electrode, a case accommodating the electrode assembly (130) and the current collecting plate (140, 150) therein, and a cap plate coupled to an end of the case to seal the case. The current collecting plate (140, 150) includes a flat outer surface (51) and an inner surface including a plurality of welding parts protruding toward the electrode assembly (130).

## Description

### BACKGROUND

### 1. Field

Aspects of embodiments of the present disclosure relate to a rechargeable battery.

### 2. Description of the Related Art

Rechargeable batteries are used for a variety of purposes, including as a power source for small electronic devices, such as mobile phones and laptop computers, and as a power source for driving motors in transportation vehicles, such as electric vehicles and hybrid vehicles. Rechargeable batteries include an electrode assembly and a case that seals the electrode assembly, and may be classified into cylindrical batteries, prismatic batteries, and pouch-type batteries depending on their appearance.

In a large-diameter cylindrical battery, an electrode of the electrode assembly is electrically connected to an electrode terminal through a current collecting plate. A tab part of the electrode and the current collecting plate may be fixed by laser welding. The current collecting plate desirably has a light and slim configuration, which is advantageous for reducing the weight and increasing the capacity of the rechargeable battery.

### SUMMARY

According to an aspect of embodiments of the present disclosure, a rechargeable battery having a current collecting plate is provided. According to another aspect of embodiments of the present disclosure, a rechargeable battery capable of reducing an overall weight and increasing a capacity of an electrode assembly by improving a current collecting plate to be lighter and slimmer is provided.

According to one or more embodiments of the present disclosure, a rechargeable battery includes an electrode assembly including a first electrode, a second electrode, and a separator, a current collecting plate electrically connected to one of the first electrode and the second electrode, a case accommodating the electrode assembly and the current collecting plate therein, and a cap plate coupled to an end of the case to seal the case. The current collecting plate includes a flat outer surface and an inner surface including a plurality of welding parts protruding toward the electrode assembly. The flat outer surface may face in a direction opposite to the electrode assembly.

According to another embodiment, the first electrode may include a first tab part, the second electrode may include a second tab part at an opposite side from the first tab part, and wherein the separator may be disposed between the first electrode and the second electrode, wherein the current collecting plate may be a first current collecting plate. The rechargeable battery may further include a second current collecting plate, wherein the first current collecting plate may be fixed to the first tab part, the second current collecting plate may be fixed to the second tab part, and the case may further accommodate the second current collecting plate therein. The second current collecting plate may include a flat outer surface and an inner surface include a plurality of welding parts protruding toward the electrode assembly, and wherein at least one of first current collecting plate and the second current collecting plate may has two different thicknesses. In other words, the rechargeable battery may include two current collecting plates according to the invention, wherein one of them may be electrically connected to the first electrode via the first tab and the other one may be electrically connected to the second electrode via the second tab.

According to another embodiment, the first current collecting plate and/or the second current collecting plate may be made of a lightweight, high-strength metal and may be manufactured through forging.

According to another embodiment, the electrode assembly may be disposed between the first and second current collecting plates.

In the following, the features described with respect to at least one of the first current collecting plate and the second current collecting plate or with respect to at least one of the current collecting plates may be realized in one of the said components or in both. These may have the same structural features according to the invention. Furthermore, they may additionally exhibit structural features typical for them, which are caused by the fact that they are connected to the first or second electrode and their function within the rechargeable battery. Accordingly, features that are described below with regard to a current cooling plate also may relate to the first current collecting plate and the second current collecting plate.

According to another embodiment, the current collecting plate may have a first thickness at a welding part of the plurality of welding parts and a second thickness at a portion other than the welding part, and the second thickness is less than the first thickness.

According to another embodiment, the portion of the at least one current collecting plate other than the welding part is compressed from the first thickness to the second thickness. In other words, the current collecting plate may have an initial thickness at the welding part, wherein the portion of the at least one current collecting plate other than the welding part is compressed with regard to the initial thickness.

According to another embodiment, the portion of the at least one current collecting plate other than the welding part is compressed by forging to have the second thickness. This allows a component to be produced that is characterized by low material loss during production in contrast to other processes for achieving these structural properties. A targeted change in the microstructure is brought about, resulting in greater structural robustness.

Robustness is the ability of a structure to withstand events like fire, explosions, impact or the consequences of human error, without being damaged to an extent disproportionate to the original cause and may be defined by EN 1991-1-7 of the Accidental Actions Eurocode.

According to another embodiment, the portion of the current collecting plate other than the welding part may be compressed from the first thickness by forging to have the second thickness.

According to another embodiment, the portion of the at least one current collecting plate other than the welding part has a higher compression and/or a higher robustness than the welding part.

According to another embodiment, the current collecting plate may further include a plurality of markers indicating positions of the plurality of welding parts on the outer surface of the current collecting plate.

According to another embodiment, the markers may be structural markers or material markers. The structural markers may be changes of a texture of the outer surface of the current collecting plate such as recesses, linear notches or hatchings or roughened surfaces. The material markers may be substances arranged on the outer surface of the current collecting plate. These may be coatings that create a visual difference compared to areas without markers. They can be color differences or differently reflective coatings. These are all particularly simple possibilities for corresponding markers, which represent a suitable indication for the welding part.

According to another embodiment, the plurality of markers may be formed in various configurations, such as scratch grooves or coating films by printing

According to another embodiment, welding parts of the plurality of welding parts may be arranged at equal intervals along a circumferential direction of the current collecting plate, and each of the plurality of welding parts may have a bar shape parallel to a radial direction of the current collecting plate.

According to another embodiment, markers of the plurality of markers may have a same shape as an edge of each of the plurality of welding parts.

Markers of the plurality of markers may include a plurality of straight line portions parallel to a length direction of each of the plurality of welding parts.

The current collecting plate may include any of aluminum, an aluminum alloy, nickel, a nickel alloy, copper, and a copper alloy.

According to another embodiment, at least one of the current collecting plates comprises a through hole in a center of the at least one current collecting plate. The through hole may function to absorb and relieve deformation caused by welding (e. g. the second tab part and the second current collecting plate) and vibration and shock transmitted (e. g. to the second current collecting plate).

According to another embodiment, the through hole may have a size within a range capable of absorbing vibration and shock without increasing current resistance between the second current collecting plate and the plurality of connectors. The size may be less than 3%, less than 2% or less than 1 % of the area of the inner surface area.
According to one or more embodiments of the present disclosure, a rechargeable battery includes an electrode assembly, a first current collecting plate, a second current collecting plate, a case, and a cap plate. The electrode assembly includes a first electrode including a first tab part, a second electrode including a second tab part at an opposite side from the first tab part, and a separator between the first electrode and the second electrode. The first current collecting plate is fixed to the first tab part, and the second current collecting plate is fixed to the second tab part. The case accommodates the electrode assembly, the first current collecting plate, and the second current collecting plate therein. The cap plate is coupled to an end of the case to seal the case. Each of the first and second current collecting plates includes a flat outer surface and an inner surface including a plurality of welding parts protruding toward the electrode assembly, and have two different thicknesses.

According to another embodiment, each of the first and second current collecting plates may have a first thickness at a welding part of the plurality of welding parts and a second thickness at a portion other than the welding part, and the second thickness may be less than the first thickness.

According to another embodiment, the portion of the first and second current collecting plates other than the welding part may be compressed from the first thickness by forging to have the second thickness.

According to another embodiment, each of the first and second current collecting plates may further include a plurality of markers indicating positions of the plurality of welding parts on the outer surfaces of the first and second current collecting plates.

According to another embodiment, the case may include a top portion including an opening, and a side portion connected to an edge of the top portion. A rivet terminal may be installed in the opening through an insulator, and the first current collecting plate may be coupled to the rivet terminal.

According to another embodiment, the side portion may include a beading portion. The second current collecting plate may include a plurality of connectors fixed to an inner surface of the beading portion.

According to another embodiment, the plurality of connectors (e.g., expansion parts) may contact an inner surface of the side portion, for example, an inner surface of the beading portion.

According to another embodiment, the plurality of connectors may be arranged at equal intervals along the circumferential direction of the second current collecting plate and may include a curved portion corresponding to the beading portion or to a contour of part of the beading portion.

According to another embodiment, the plurality of connectors may be integrally fixed to the beading portion by a method such as welding.

According to an aspect of embodiments, the current collecting plate may secure a welding margin by providing a welding part with a sufficient thickness for welding, and an overall thickness of the current collecting plate may be reduced by forming an overall slim configuration. As the thickness of the current collecting plate is reduced, an overall height of the electrode assembly may be expanded to increase battery capacity.

### BRIEF DESCRIPTION OF THE DRAWINGS

FIG. 1 is a cross-sectional view of a rechargeable battery according to an embodiment.
FIG. 2 is a partial enlarged view of an electrode assembly in the rechargeable battery shown in FIG. 1.
FIG. 3 is an exploded perspective view showing an electrode assembly and two current collecting plates of the rechargeable battery shown in FIG. 1.
FIG. 4 is an enlarged view of a first current collecting plate shown in FIG. 3.
FIG. 5 is a perspective view illustrating an inner surface of the first current collecting plate shown in FIG. 4.
FIG. 6 is a cross-sectional view of the first current collecting plate taken along the line A-A of FIG. 4.
FIG. 7 is a perspective view of a current collecting plate according to a comparative example.
FIG. 8 is a cross-sectional view of the current collecting plate according to the comparative example, cut along the line B-B of FIG. 7.
FIG. 9 is a perspective view illustrating an outer surface of the first current collecting plate of the rechargeable battery according to another embodiment.

### DETAILED DESCRIPTION

The present invention will be described more fully herein with reference to the accompanying drawings, in which some example embodiments of the invention are shown. As those skilled in the art would realize, the described embodiments may be modified in various different ways, all without departing from the scope of the present invention.

Throughout the specification and claims, if a part is referred to "comprise" or "include" a certain element, it means that it may further comprise or include other elements rather than exclude other elements, unless specifically indicated otherwise.

In addition, expressions described in the singular may be interpreted in the singular or plural unless explicit expressions to the contrary are used.

In addition, terms including an ordinal number, such as "first," "second," etc., may be used to describe various elements, but the elements are not limited by the terms. The above terms are used for the purpose of distinguishing one element from another element. For example, without departing from the scope of the present disclosure, a first element may be referred to as a second element, and similarly, a second element may be referred to as a first element.

Further, if a component is referred to be "connected" with another component, it includes not only a case in which two components are directly connected but also a case in which two components are indirectly or non-contactedly connected with one or more other components interposed therebetween, or a case in which two components are electrically connected. On the other hand, if an element is referred to as "directly connected" to another element, it is to be understood that no other element exists therebetween.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

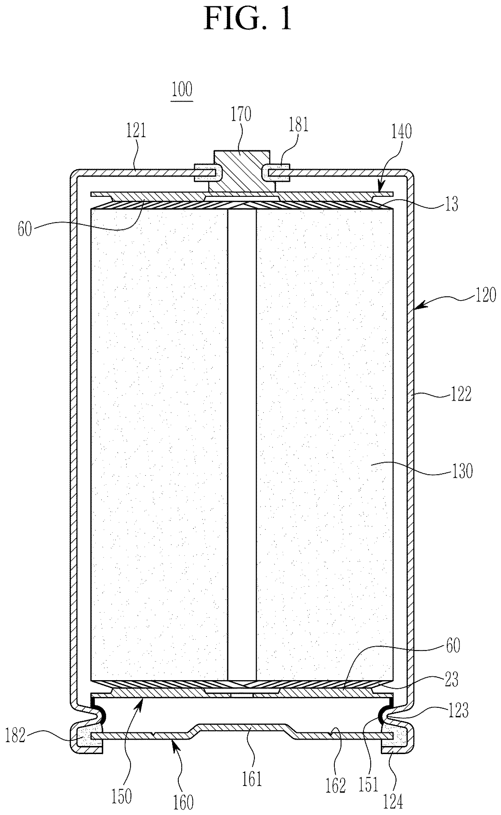

FIG. 1 is a cross-sectional view of a rechargeable battery according to an embodiment.

Referring to FIG. 1, a rechargeable battery 100 according to an embodiment may include a case, or, in other words can, 120, an electrode assembly 130 accommodated inside the case 120, two current collecting plates 140 and 150, and a cap plate 160 coupled to an end of the case 120 to seal the case 120. In an embodiment, the case 120 and the cap plate 160 may form a cylindrical shape with both, or opposite, sides (upper and lower sides) closed, and the electrode assembly 130 may be formed in a wound structure wound in a jelly-roll shape. The two current collecting plates 140 and 150 may be composed of metal disks.

The case 120 may include a top portion 121 and a side portion 122 connected to an edge of the top portion 121. The top portion 121 may be referred to as a bottom portion if the case 120 is flipped upside down. The top portion 121 may be in the shape of a disk, and the side portion 122 may be in the shape of a hollow cylinder. In an embodiment, the case 120 may be made of steel, stainless steel, aluminum, or an aluminum alloy.

In an embodiment, an opening for installing a rivet terminal 170 may be disposed at a center or middle region of the top portion 121. In another embodiment, the rechargeable battery 100 may be provided with a terminal of a different type than the rivet terminal 170, and, in this case, the opening in the top portion 121 may be omitted. The rivet terminal 170 may be installed in the opening of the top portion 121 via a first insulator 181 to maintain an insulated state from the case 120.

The cap plate 160 may be coupled to the end of the case 120 via a second insulator 182 and may be electrically non-polar. In an embodiment, the cap plate 160 may include a central portion 161 that is convexly deformed toward the electrode assembly 130, and a notch groove 162 may be disposed on an inner surface of the cap plate 160 around the central portion 161.

Gas may be generated inside the case 120 for various reasons during charging or discharging of the rechargeable battery 100 or during transportation. As a result, an internal pressure of the rechargeable battery 100 may rapidly increase. If the internal pressure of the rechargeable battery 100 increases, the notch groove 162 is ruptured, causing the cap plate 160 to open and the internal gas to be discharged, thereby preventing or substantially preventing the rechargeable battery 100 from exploding.

To install the cap plate 160, a beading portion 123 and a crimping portion 124 may be disposed on the side portion 122 of the case 120. The beading portion 123 is a part of the side portion 122 that is deformed to be convex toward an inside of the case 120, and may support the electrode assembly 130 to prevent or substantially prevent the electrode assembly 130 from shaking. The crimping portion 124 is an end part of the side portion 122 bent horizontally from the side portion 122 toward the inside of the case 120, and may cover an edge of the cap plate 160. The second insulator 182 and the cap plate 160 are compressed and fixed in position by the beading portion 123 and the crimping portion 124.

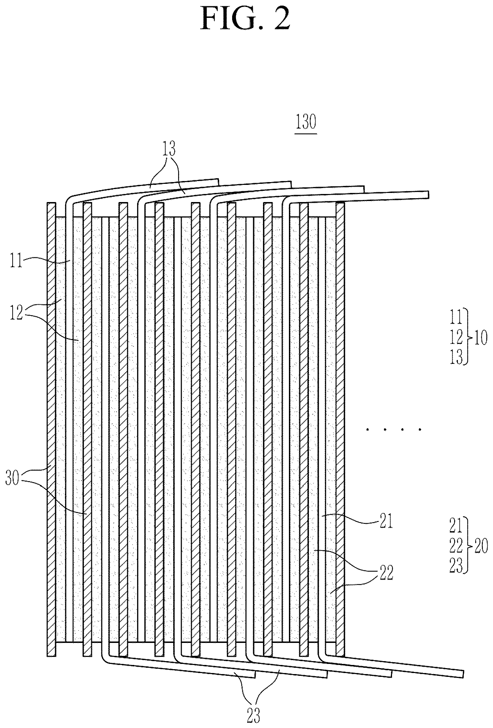

FIG. 2 is a partial enlarged view of the electrode assembly in the rechargeable battery shown in FIG. 1.

Referring to FIGS. 1 and 2, the electrode assembly 130 may include a first electrode 10, a second electrode 20, and a separator 30. The separator 30 may be disposed between the first electrode 10 and the second electrode 20 to insulate therebetween.

In an embodiment, each of the first electrode 10, the second electrode 20, and the separator 30 may be configured in a shape of a long strip, and the first electrode 10 and the second electrode 20 may be wound in a jelly-roll form to implement the appearance of a cylinder. For example, the first electrode 10, the separator 30, the second electrode 20, and the separator 30 may be sequentially stacked and then wound.

The first electrode 10 may include a first substrate 11, a first composite layer 12 disposed on the first substrate 11, and a first tab part 13 extending to a side (e.g., an upper side) from the first substrate 11. The first tab part 13 may be a part of the first substrate 11 where the first composite layer 12 is not disposed, and may be referred to as a first uncoated part. The first tab part 13 may be disposed higher than the separator 30 and exposed outside a top of the separator 30.

The second electrode 20 may include a second substrate 21, a second composite layer 22 disposed on the second substrate 21, and a second tab part 23 extending from the second substrate 21 toward another side (e.g., a lower side). The second tab part 23 may be a part of the second substrate 21 where the second composite layer 22 is not disposed, and may be referred to as a second uncoated part. The second tab part 23 may be disposed lower than the separator 30 and exposed outside a bottom of the separator 30.

In a lithium-ion battery, in an embodiment, the first substrate 11 may be aluminum foil, the first composite layer 12 may include a transition metal oxide, such as LiCoO₂, LiNiO₂, LiMn₂O₄, a conductive material, a binder, or the like, the second substrate 21 may be a copper foil or a nickel foil, and the second composite layer 22 may include graphite, a conductive material, a binder, or the like. The first electrode 10 may be referred to as a positive electrode, and the second electrode 20 may be referred to as a negative electrode.

The separator 30 may include a polymer material, such as polyethylene (PE) or polypropylene (PP), and insulates the first electrode 10 and the second electrode 20 while allowing movement of lithium ions. The electrode assembly 130 may be accommodated inside the case 120 together with the first and second current collecting plates 140 and 150 and an electrolyte.

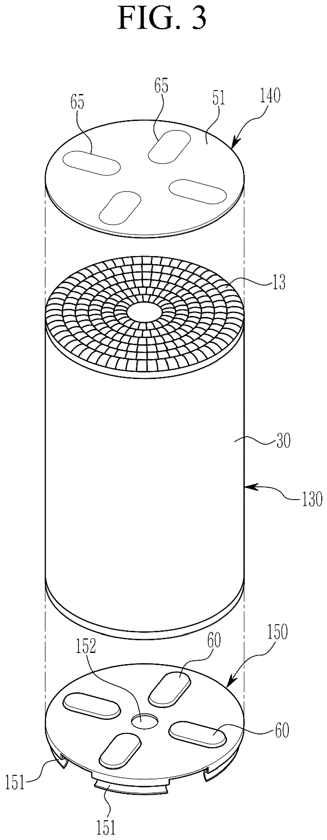

FIG. 3 is an exploded perspective view showing an electrode assembly and two current collecting plates of a rechargeable battery shown in FIG. 1.

Referring to FIGS. 1 to 3, the first tab part 13 may be bent toward a center of the electrode assembly 130 and overlap with the adjacent first tab part 13. In an embodiment, a plurality of incision lines may be disposed on the first tab part 13 such that the first tab part 13 may be easily bent. The second tab part 23 may also be bent toward the center of the electrode assembly 130 and overlap with the adjacent second tab part 23. In an embodiment, a plurality of incision lines may be disposed on the second tab part 23 such that the second tab part 23 may be easily bent.

The first current collecting plate 140 may be disposed on an outside (e.g., upper side) of the first tab part 13, and, in an embodiment, may be integrally fixed with the first tab part 13 by laser welding to be charged with a same polarity as the first electrode 10.

The second current collecting plate 150 may be disposed on an outside (e.g., lower side) of the second tab part 23, and, in an embodiment, may be integrally fixed with the second tab part 23 by laser welding to be charged with a same polarity as the second electrode 20.

The first current collecting plate 140 may be coupled with the rivet terminal 170, and the rivet terminal 170 may function as a terminal (positive terminal) of the first electrode 10. The second current collecting plate 150 may be fixed to an inner surface of the case 120, and the case 120 may function as a terminal (negative terminal) of the second electrode 20.

In an embodiment, the second current collecting plate 150 may include a plurality of connectors 151 (e.g., expansion parts) that contact an inner surface of the side portion 122, for example, an inner surface of the beading portion 123. In an embodiment, the plurality of connectors 151 may be arranged at equal intervals along the circumferential direction of the second current collecting plate 150 and may include a curved portion corresponding to the beading portion 123. The plurality of connectors 151 may be fixed to the beading portion 123 by a method such as welding.

A through hole 152 may be disposed in a center of the second current collecting plate 150. The through hole 152 may function to absorb and relieve deformation caused by welding the second tab part 23 and the second current collecting plate 150 and vibration and shock transmitted to the second current collecting plate 150. The through hole 152 may have a size within a range capable of absorbing vibration and shock without increasing current resistance between the second current collecting plate 150 and the plurality of connectors 151. However, in an embodiment, the through hole 152 of the second current collecting plate 150 may be omitted.

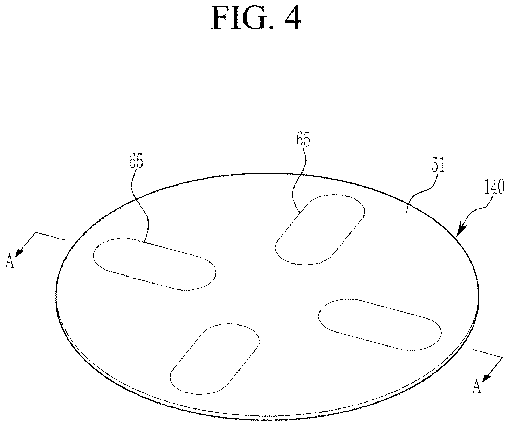

In an embodiment, the second current collecting plate 150 has a same configuration as the first current collecting plate 140 except for the plurality of connectors 151 and the through hole 152. The first current collecting plate 140 will be described in further detail with reference to FIGS. 4 to 6, and overlapping descriptions of the second current collecting plate 150 may be omitted.

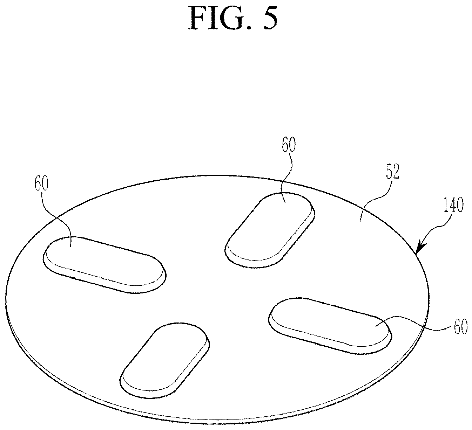

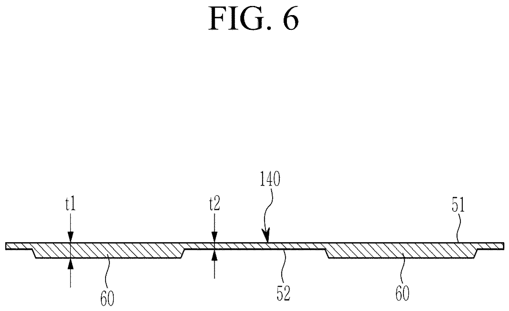

FIG. 4 is an enlarged view of a first current collecting plate shown in FIG. 3; FIG. 5 is a perspective view illustrating an inner surface of the first current collecting plate shown in FIG. 4; and FIG. 6 is a cross-sectional view of the first current collecting plate taken along the line A-A of FIG. 4.

Referring to FIGS. 4 to 6, the first current collecting plate 140 may include a flat outer surface 51 and an inner surface 52 where a plurality of welding parts 60 protruding toward the electrode assembly 130 are disposed, and has two different thicknesses t1 and t2.

In an embodiment, the outer surface 51 of the first current collecting plate 140 forms a substantially flat surface. A plurality of welding parts 60 for welding with the first tab part 13 protrude from the inner surface 52 of the first current collecting plate 140. The plurality of welding parts 60 are in close contact with the first tab part 13 and, in an embodiment, are melted together with the first tab part 13 by laser welding to form a welding nugget.

In an embodiment, each of the plurality of welding parts 60 may have a bar shape with rounded ends, and may be disposed parallel to a radial direction of the first current collecting plate 140. In an embodiment, four welding parts 60 of a same size and shape may be arranged at 90° intervals along a circumferential direction of the first current collecting plate 140. In an embodiment, the welding part 60 is not biased to one side on the first tab part 13 and is evenly in close contact with the first tab part 13, thereby improving current collection efficiency. However, a number and shape of the welding parts 60 are not limited to the example shown, and various modifications are possible.

The first current collecting plate 140 may include the first thickness t1 measured at the welding part 60 and the second thickness t2 measured at a portion other than the welding part 60, and the second thickness t2 is less, or smaller, than the first thickness t1. In an embodiment, the first current collecting plate 140 may be made of a lightweight, high-strength metal and may be manufactured through forging.

For example, the first current collecting plate 140 may be made of any of (e.g., any one of) aluminum, an aluminum alloy, nickel, a nickel alloy, copper, and a copper alloy. In an embodiment, a manufacturing process of the first current collecting plate 140 may include a first task in which a plate-shaped member of the first thickness t1 is prepared, a second task in which a position and shape of the welding part 60 are set, and a task in which the remaining portion, excluding the welding part 60, is compressed and formed to the second thickness t2 by forging.

In an embodiment, a plurality of markers 65 indicating a position of the welding part 60 may be disposed on the outer surface 51 of the first current collecting plate 140. In a state in which the first current collecting plate 140 overlaps the first tab part 13, it may be difficult to confirm a position of the welding part 60 on the outside of the first current collecting plate 140. In a process of assembling the rechargeable battery 100, the plurality of markers 65 guide an aiming position of a laser beam to enable welding of the welding part 60 and the first tab part 13.

The plurality of markers 65 may be formed in various configurations, such as scratch grooves or coating films by printing. In an embodiment, the plurality of markers 65 may be provided in a same size and shape as edges of each of the welding parts 60 to provide position and shape information of each of the plurality of welding parts 60.

Referring again to FIG. 1, in the rechargeable battery 100 according to the present embodiment, the current collecting plates 140 and 150 are made of a lightweight, high-strength metal, thereby enabling the rechargeable battery 100 to be lightweight. In addition, the current collecting plates 140 and 150 of the above-described configuration have an overall slim configuration to reduce an overall thickness of the current collecting plates 140 and 150, and allow the electrode assembly 130 to be expanded, or enlarged, by the thickness of the reduced current collecting plates 140 and 150 to increase capacity.

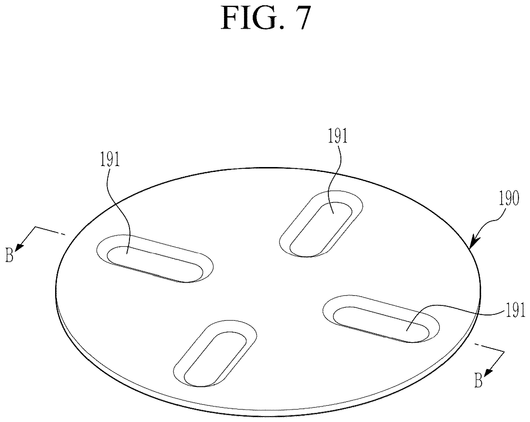

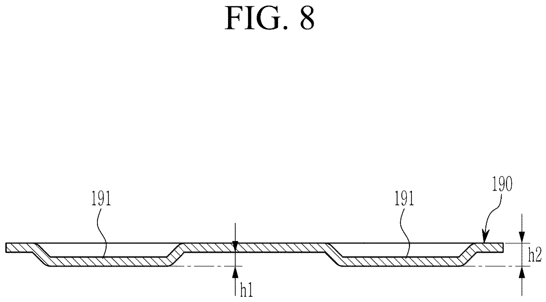

FIG. 7 is a perspective view of a current collecting plate according to a comparative example; and FIG. 8 is a cross-sectional view of the current collecting plate according to the comparative example, cut along the line B-B of FIG. 7.

Referring to FIGS. 7 and 8, a current collecting plate 190 of the comparative example has a single thickness and includes a plurality of welding parts 191 that are convexly deformed on one side (lower side) by press forming. A protruding height h1 of the welding part 191 is generally greater than the thickness of the current collecting plate 190, and an overall height h2 of the current collecting plate 190 is approximately three times or more than the thickness of the current collecting plate 190.

Referring to FIGS. 6 and 8, in the rechargeable battery 100 of an embodiment of the present disclosure, the first current collecting plate 140 may be manufactured through a process of forging parts other than the welding part 60. Therefore, the thickness t1 measured at the welding part 60 may be the same as or similar to the thickness of the current collecting plate 190 in the comparative example, and the second thickness t2 measured in parts other than the welding part 60 may be smaller than the thickness of the current collecting plate 190 in the comparative example.

The current collecting plates 140 and 150 of the embodiment of the present disclosure may secure a welding margin by providing the welding part 60 with a sufficient thickness for welding, and have a slimmer configuration compared to the current collecting plate 190 of the comparative example, thereby reducing the overall thickness. In the rechargeable battery 100 according to an embodiment of the present disclosure, battery capacity may be increased by increasing the overall height of the electrode assembly 130 as the thickness of the current collecting plates 140 and 150 is reduced.

The current collecting plates 140 and 150 of an embodiment of the present disclosure are made of high-strength metal even though the second thickness t2 is smaller than the thickness of the current collecting plate 190 of the comparative example. Thus, a same or equivalent mechanical strength as the current collecting plate 190 of the comparative example may be secured.

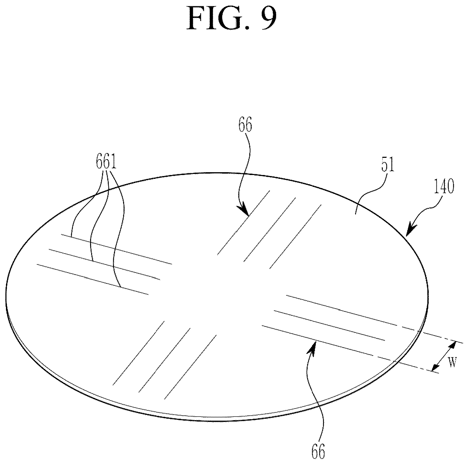

FIG. 9 is a perspective view illustrating an outer surface of a first current collecting plate of a rechargeable battery according to another embodiment. The rechargeable battery of the present embodiment has the same or similar configuration as the embodiment described above, except for the marker of the first current collecting plate described later. In the rechargeable battery of the present embodiment, the second current collecting plate may have the same structure as the first current collecting plate except for the plurality of connectors and through holes and, therefore, an overlapping description of the second current collecting plate will be omitted.

Referring to FIG. 9, a plurality of markers 66 disposed on the outer surface 51 of the first current collecting plate 140 may be composed of a plurality of straight line parts 661 parallel to a length direction of each of the plurality of welding parts 60. For example, four sets of markers 66 corresponding to four welding parts 60 may be disposed on the outer surface 51 of the first current collecting plate 140, and each set of markers 66 may be composed of two or more straight line parts 661 parallel to the length direction of the corresponding welding part 60.

In FIG. 9, a case in which each set of markers 66 is composed of three lines of straight line parts 661 is shown as an example. In an embodiment, the plurality of straight line parts 661 may all have a same length, and may have a length equal to or less than a length of the corresponding welding part 60.

For each set of markers 66, a width w of the marker 66 may be equal to or greater than a width of the corresponding welding part. The width w of the marker 66 may be defined as the distance between two outermost straight line parts 661 among the plurality of straight line parts 661. The plurality of markers 66 may provide location information and approximate shape information of each of the plurality of welding parts 60.

While the present disclosure has been described in connection with what are presently considered to be some practical embodiments, it is to be understood that the present disclosure is not limited to the disclosed embodiments, but, on the contrary, is intended to cover various modifications and equivalent arrangements included within the scope of the appended claims.

## Claims

1. A rechargeable battery (100) comprising:
an electrode assembly (130) comprising a first electrode (10), a second electrode (20), and a separator (30);
a current collecting plate (140, 150) electrically connected to one of the first electrode (10) and the second electrode (20);
a case (120) accommodating the electrode assembly (130) and the current collecting plate (140, 150) therein; and
a cap plate (160) coupled to an end of the case (120) to seal the case (120),
wherein the current collecting plate (140, 150) comprises a flat outer surface (51) and an inner surface (52) comprising a plurality of welding parts (60) protruding toward the electrode assembly (130).

2. The rechargeable battery (100) as claimed in claim 1, wherein the first electrode (10) comprises a first tab part (13), the second electrode (20) comprises a second tab part (23) at an opposite side from the first tab part (13), wherein the separator (30) is disposed between the first electrode (10) and the second electrode (20), wherein the current collecting plate (140) is a first current collecting plate (140);
the rechargeable battery (100) further comprising a second current collecting plate (150), wherein the first current collecting plate (140) is fixed to the first tab part (13), the second current collecting plate (150) is fixed to the second tab part (23), and the case (120) further accommodates the second current collecting plate (150) therein;
wherein the second current collecting plate (150) comprises a flat outer surface (51) and an inner surface (52) comprising a plurality of welding parts (60) protruding toward the electrode assembly (130), and
wherein at least one of first current collecting plate (140) and the second current collecting plate (150) has two different thicknesses.

3. The rechargeable battery (100) as claimed in claim 1 or 2, wherein at least one of the current collecting plates (140, 150) has a first thickness (t1) at a welding part (60) of the plurality of welding parts (60) and a second thickness (t2) at a portion other than the welding part (60), and the second thickness (t2) is less than the first thickness (t1).

4. The rechargeable battery (100) as claimed in claim 3, wherein the portion of the at least one current collecting plate (140, 150) other than the welding part (60) is compressed from the first thickness (t1) to the second thickness (t2).

5. The rechargeable battery (100) as claimed in claim 4, wherein the portion of the at least one current collecting plate (140, 150) other than the welding part (60) is compressed by forging to have the second thickness (t2).

6. The rechargeable battery (100) as claimed in any one of claims 3 to 5, wherein the portion of the at least one current collecting plate (140, 150) other than the welding part (60) has a higher compression and/or a higher robustness than the welding part (60).

7. The rechargeable battery (100) as claimed in any one of claims 1 to 6, wherein at least one of the current collecting plates (140, 150) further comprises a plurality of markers (65, 66) indicating positions of the plurality of welding parts (60) on the outer surface (51) of the at least one current collecting plate (140, 150).

8. The rechargeable battery (100) as claimed in claim 7, wherein markers (65, 66) of the plurality of markers (65, 66) have a same shape as an edge of each of the plurality of welding parts (60).

9. The rechargeable battery (100) as claimed in claim 7 or 8, wherein markers (65, 66) of the plurality of markers (65, 66) comprise a plurality of straight line portions parallel to a length direction of each of the plurality of welding parts (60).

10. The rechargeable battery (100) as claimed in any one of claims 1 to 9, wherein welding parts (60) of the plurality of welding parts (60) are arranged at equal intervals along a circumferential direction of at least one of the current collecting plates (140, 150), and/or each of the plurality of welding parts (60) has a bar shape parallel to a radial direction of at least one of the current collecting plates (140, 150).

11. The rechargeable battery (100) as claimed in any one of claims 1 to 10, wherein at least one of the current collecting plates (140, 150) comprises any of aluminum, an aluminum alloy, nickel, a nickel alloy, copper, and a copper alloy.

12. The rechargeable battery (100) as claimed in any one of claims 1 to 11, wherein at least one of the current collecting plates (140, 150) comprises a through hole (152) in a center of the at least one current collecting plate (140, 150).

13. The rechargeable battery (100) as claimed in any one of claims 1 to 12, wherein each of the first and second current collecting plates (140, 150) has a first thickness (t1) at a welding part (60) of the plurality of welding parts (60) and a second thickness (t2) at a portion other than the welding part (60), and the second thickness (t2) is less than the first thickness (t1).

14. The rechargeable battery (100) as claimed in any one of claims 1 to 13, wherein the case (120) comprises a top portion (121) comprising an opening, and a side portion (122) connected to an edge of the top portion (121),
a rivet terminal (170) is installed in the opening through an insulator (181), and
the first current collecting plate (140) is coupled to the rivet terminal (170).

15. The rechargeable battery (100) as claimed in claim 14, wherein
the side portion (122) comprises a beading portion (123), and
the second current collecting plate (150) comprises a plurality of connectors (151) fixed to an inner surface (52) of the beading portion (123).
